Europäisches Patentamt

European Patent Office

Office européen des brevets

(11) Publication number: **0 370 517 B1**

# EUROPEAN PATENT SPECIFICATION

(45) Date of publication of patent specification: **29.03.95**

(51) Int. Cl.6: **C08K 3/22**, C08L 23/04,
//(C08L23/04,51:06,23:08,
C08K3:22)

(21) Application number: **89121712.7**

(22) Date of filing: **24.11.89**

(54) Flame retardant composition.

(30) Priority: **25.11.88 JP 297896/88**

(43) Date of publication of application:
**30.05.90 Bulletin 90/22**

(45) Publication of the grant of the patent:
**29.03.95 Bulletin 95/13**

(84) Designated Contracting States:
**AT BE CH DE ES FR GB GR IT LI LU NL SE**

(56) References cited:
**EP-A- 0 131 358**
**EP-A- 0 270 924**
**EP-A- 0 280 761**

**PATENT ABSTRACTS OF JAPAN, vol. 11, no.
185, (C-428)[2632], 13th June 1987;& JP-A-62
11 745 (NIPPON PETROCHEMICAL CO., LTD)
20-01-1987**

(73) Proprietor: **NIPPON UNICAR COMPANY LIMIT-
ED
Asahi-Tokai Building
6-1 Ohtemachi 2-Chome
Chiyoda-ku**
Tokyo 100 (JP)

(72) Inventor: **Horita, Katsuhiro
5-25-17, Take
Yokosuka-shi
Kangawa-ken (JP)**
Inventor: **Koshiyama, Takao
2-29-15, Sagamidai
Sagamihara-shi
Kangawa-ken (JP)**
Inventor: **Hayashi, Shoji
726-35, Shinbashi-cho
Izumi-ku
Yokohama-shi
Kanagawa-ken (JP)**
Inventor: **Yoshida, Mamoru
29-18, Torigaoka, Tozuka-ku
Yokohama-shi
Kanagawa-ken (JP)**
Inventor: **Moritani, Yasuharu
4-29-10, Shichirigahma Higashi
Kamakura-shi
Kanagawa-ken (JP)**

Inventor: **Hashimoto, Satoshi**
**5-14-19, Iwato**
**Yokosuka-shi**
**Kanagawa-ken (JP)**

(74) Representative: **Weinhold, Peter, Dr. et al**
**Patentanwälte Dipl.-Ing. G. Dannenberg**
**Dr. P. Weinhold**
**Dr. D. Gudel**
**Dipl.-Ing. S. Schubert**
**Dr. P.**
**Barz**
**Siegfriedstrasse 8**
**D-80803 München (DE)**

# EP 0 370 517 B1

## Description

This invention relates to flame retardant compositions containing thermoplastic resins and an inorganic flame retardant filler. The compositions are particularly useful as insulation for wire and cable.

Thermoplastic resins, which have good electrical insulation characteristics, are widely used to provide insulating jacketing or sheaths for wire and cable. Recently, there has been a demand for improved flame retardant properties, e.g., as high as V-1 to V-0 using Underwriters Laboratories standards.

Thermoplastic resin can be made flame retardant by adding to the resin organic halides or antimony oxides, for example, or the resin itself can be halogenated such as polyvinyl chloride or chlorinated polyethylene. These thermoplastic resins, however, on burning, drip, sag, and emit large amounts of smoke and other harmful gases, and also corrode metals.

In order to solve these problems, it has been proposed to add metal hydroxides to non-halogenated thermoplastic resins. Aluminum hydroxide was first used because of its low cost, but it has such a low decomposition temperature (170° to 190°C) that the aluminum hydroxide decomposes generating water, which, in turn, causes foaming on interior surfaces.

Compared with aluminum hydroxide, magnesium hydroxide has a much higher decomposition temperature (about 360°C), and, thus, exhibits less foaming. For this reason, and others, magnesium hydroxide has been widely used as a flame retardant in resins. A disadvantage of a thermoplastic resin/magnesium hydroxide flame retardant composition, however, is that the magnesium hydroxide causes a decrease in the extrusion rate of the composition thus lowering productivity, and adrersely affects the mechanical strength, elongation, flexibility, and low temperature performance of the composition when it is in an extruded or molded state.

An object of this invention, therefore, is to provide a thermoplastic resin/inorganic flame retardant composition, which is suitable as an insulating jacket for wire and cable, but is substantially free of the deficiencies mentioned above.

Other object and advantages will become apparent hereinafter.

According to the invention, a composition has been discovered which meets the above objective. The composition comprises:

(i) a thermoplastic resin;

(ii) an inorganic flame retardant;

(iii) a copolymer of ethylene and either 1-hexene or 1-octene, said copolymer having been modified with an unsaturated organic compound containing at least one carboxylate group; and

(iv) optionally, a copolymer of ethylene and one or more alpha-olefins having a crystallinity of less than about 40 percent by weight.

The thermoplastic resin can be any homopolymer or copolymer produced from two or more comonomers, or a blend of two or more of these polymers, conventionally used as jacketing and/or insulating materials in wire and cable applications. Generally, the monomers useful in the production of these homopolymers and copolymers will have 2 to 20 carbon atoms. Examples of such monomers are alpha-olefins such as ethylene, propylene, 1-butene, 1-hexene, 4-methyl-1-pentene, and 1-octene; unsaturated esters such as vinyl acetate, ethyl acrylate, methyl acrylate, methyl methacrylate, t-butyl acrylate, n-butyl acrylate, n-butyl methacrylate, 2-ethylhexyl acrylate, and other alkyl acrylates; diolefins such as 1,4-pentadiene, 1,3-hexadiene, 1,5-hexadiene, 1,4-octadiene, and ethylidene norbornene; other monomers such as styrene, p-methyl styrene, alphamethyl styrene, vinyl naphthalene, and similar aryl olefins; nitriles such as acrylonitrile and methacrylonitrile; vinyl methyl ketone, vinyl methyl ether, and maleic anhydride; and acrylic acid, methacrylic acid, and other similar unsaturated acids. In addition to polyolefins, included among the polymers can be polyesters, polycarbonates, and polyurethanes. The homopolymers and copolymers of ethylene are preferred. The resins are preferably non-halogenated.

Examples of homopolymers and copolymers of ethylene are high pressure, low density polyethylene; polyethylenes of various densities (high, medium, linear low, very low, and ultra-low) wherein the comonomer is 1-butene, 1-hexene, 4-methyl-1-pentene, or l-octene; ethylene/propylene rubber; ethylene/propylene/diene monomer rubber; ethylene/vinyl acetate copolymer; ethylene/ethyl acrylate copolymer; isobutylene/isoprene rubber; and polybutene-1.

The inorganic flame retardant can be any one or a mixture of the following: aluminum hydroxide, magnesium hydroxide, potassium hydroxide, zirconium hydroxide, barium metaborate, zinc metaborate, calcium hydroxide, kaolinite, montmorillonite, talc, clay, red phosphorus, barium borate, silica, white carbon, diatomaceous earth, barium sulfate, cellite, alumina, titanium oxide, zinc oxide, molybdenum disulfide, calcium phosphate, asbestos, and lithopone. Magnesium hydroxide is preferred.

3

While conventional magnesium hydroxides can be used, a particularly preferred magnesium hydroxide and a method for its preparation are described in United States Patent No. 4,098,762. Preferred characteristics for this magnesium hydroxide are (a) a strain in the <101> direction of no more than $3.0 \times 10^{-3}$; (b) a crystallite size in the <101> direction of more than 800 angstroms; and (c) a surface area, determined by the BET method, of less than 20 square meters per gram.

The average particle diameter of the magnesium hydroxide can be in the range of 0.1 to 15 microns and is preferably in the range of 0.5 to 3 microns. The surface area can be 1 to 20 square meters per gram and is preferably 3 to 8 square meters per gram.

The inorganic flame retardant is preferably surface treated with various fatty acids or metallic salts of fatty acids such as stearic acid, sodium oleate, sodium stearate, sodium lauryl sulfonate, calcium stearate, or zinc stearate as described, for example, in United States patent 4,255,303. It can also be surface treated with a silane coupling agent, a titanate coupling agent, or an aluminum coupling agent. In any case, it is preferable to first surface treat the inorganic flame retardants.

The inorganic flame retardant can be used in combination with various organic flame retardants such as those containing bromine, chlorine, or phosphorus. Examples of suitable organic flame retardants are hexabromobenzene, tris(2,3-dibromopropyl) isocyanate; 2,2-bis(4-hydroxyethoxy-3,5-dibromophenyl) propane; decabromodiphenyloxide; pentabromodiphenylether; hexabromobiphenyl; chlorinated paraffin; brominated epoxy resin; halogenated phosphate ester; tris-chloroethyl phosphate; halogenated condensed phosphate ester; and diphenylcresyl phosphate.

The proportions of components in subject composition based on 100 parts by weight of thermoplastic resin are as follows:

| Component | Broad Range | Preferred Range |
|---|---|---|
| | Parts by weight | |
| Inorganic Flame Retardant | 60 to 450 | 100 to 250 |
| Organic Flame Retardant (Optional) | 0.5 to 10 | 2 to 5 |
| $C_2/C_6$ or $C_2/C_8$ Acid Modified Copolymer | 20 to 80 | 30 to 60 |
| Low Crystallinity Copolymer (Optional) | 10 to 40 | 20 to 30 |

The next component to be considered is a copolymer of ethylene and either 1-hexene or 1-octene wherein the copolymer has been modified with an unsaturated organic compound containing at least one carboxylate group, i.e., a COO- group. The copolymer can be prepared in a conventional manner using a slurry process, a gas phase process, or a high temperature solution process. The process can be catalyzed with a Ziegler catalyst containing, for example, titanium or vanadium, an organoaluminum cocatalyst, and a silica or magnesium halide support, or a chromium catalyst. Generally, 90 to 99 mol percent of ethylene is copolymerized with 1 to 10 mol percent of 1-hexene or 1-octene. The copolymer of ethylene and 1-hexene, typically, has a density of 0.89 to 0.93 gram per cubic centimeter, a melt index of 0.5 to 10 grams per 10 minutes, and a melting point of 122 to 127 °C. The copolymer of ethylene and 1-octene, typically, has a density of 0.900 to 0.940 gram per cubic centimeter, a melt index of 1 to 10 grams per 10 minutes, and a melting point of 120 to 128 °C.

The modification of the copolymer of ethylene and either 1-hexene or 1-octene with an unsaturated organic compound containing at least one carboxylate group, which may also be referred to as acid modification, can be accomplished by using a solution, suspension, or melt process. Examples of suitable modifiers are unsaturated carboxylic acids such as fumaric acid, acrylic acid, maleic acid, itaconic acid, methyacrylic acid, sorbic acid, crotonic acid, and citraconic acid; acid anhydrides such as maleic anhydride; itaconic anhydride, and citraconic anhydride; epoxy compounds such as glycidyl acrylate and glycidyl methacrylate; hydroxy compounds such as 2-hydroxyethyl acrylate, 2-hydroxyethyl methacrylate, and polyethylene glycol monoacrylate; metal salts such as sodium acrylate, sodium methacrylate, and zinc acrylate; various acrylate and methacrylate esters such as ethyl acrylate, propyl acrylate, and isobutyl acrylate; vinyl esters such as vinyl acetate, vinyl propionate, and vinyl butyrate; and silanes such as methacryloxypropylsilane and vinyl acetoxysilane. Mixtures of the aforementioned modifiers can be used, if desired. Preferred modifiers are acrylic acid, maleic acid, and maleic anhydride. The modifiers can be used in combination with various monomers such as styrene, vinyl silane, acrylonitrile, butyl vinyl ether, and 2-hydroxy propyl acrylate.

The modifiers can be present in the copolymer in an amount of 0.005 to 5 mol percent, and preferably in an amount of 0.01 to 1 mol percent.

In order to prepare the modified copolymer by the solution process, the copolymer is heated together with, for example, an unsaturated carboxylic acid and a radical initiator in a non-polar solvent at a high temperature. Examples of the non-polar organic solvent are hexane, heptane, benzene, toluene, xylene, chlorobenzene, and tetrachloroethane. The radical initiator is an organic peroxide such as 2,5-dimethyl-2,5-di(tert-butylperoxy)hexane; 2,5-dimethyl (tert-butylperoxy)hexyne-1; and benzoyl peroxide. The temperature is 110°C to 160°C, preferably 130°C to 150°C.

In the suspension process, the copolymer is heated together with, for example, an unsaturated carboxylic acid and a radical initiator in a polar solvent such as water under high pressure and a temperature higher than 100°C.

In the melt process, the copolymer is melted and mixed with a modifier and a radical initiator in a mixing device such as an extruder. The mixing temperature is usually higher than the melting point of the copolymer and lower than 300°C.

The low crystallinity ethylene/alpha-olefin copolymer can be a random copolymer of ethylene and an alpha-olefin having 3 to 10 carbon atoms. A typical copolymer will contain 85 to 95 mol percent of ethylene, have a melt index of 0.1 to 50 grams per 10 minutes, a density of 0.870 to 0.900 gram per cubic centimeter, a degree of crystallinity of 5 to 40 percent by weight (measured by X-ray diffraction), and a melting point of 40 to 100°C. The copolymer can also be substantially amorphous.

Examples of the alpha-olefin to be copolymerized with ethylene are propylene, 1-butene, 1-pentene, 1-hexene, 4-methylpentene-1, 1-octene, 1-decene, and mixtures thereof. The $C_3$ to $C_5$ alpha-olefins are preferred, particularly 1-butene.

The low crystallinity copolymer can be the same as the thermoplastic resin, but this is not preferred.

The low crystallinity copolymer is preferably produced by copolymerizing ethylene with the alpha-olefin in a solvent medium in the presence of a catalyst system based on a vanadium compound such as vanadium trichloride, monoethoxy dichlorovanadyl, triethoxyvanadyl, vanadium oxydiacetylacetonate, and vanadium triacetylacetonate and an organoaluminum compound represented by the formula $R_nAlX_{3-n}$ wherein R is a hydrocarbyl group such as an alkyl group; X is hydrogen, chlorine, or an alkoxy group having 2 to 4 carbon atoms; each R and X are the same or different; and n is an integer from 1 to 3. The copolymer can also be made by other conventional processes.

Other useful additives for subject composition are surfactants, reinforcing filler or polymer additives, crosslinking agents, ultraviolet stabilizers, antistatic agents, pigments, dyes, slip agents, plasticizers, lubricants, viscosity control agents, extender oils, metal deactivators, water tree growth retardants, voltage stabilizers, flame retardant additives, and smoke suppressants.

Examples of antioxidants are: hindered phenols such as tetrakis[methylene(3,5-di-tert-butyl-4-hydroxyhydrocinnamate)]methane and thiodiethylene bis(3,5-di-tert-butyl-4-hydroxy)hydrocinnamate; phosphites and phosphonites such as tris(2,4-di-tert-butylphenyl)phosphite and di-tert-butylphenylphoshhonite; various amines such as polymerized 2,2,4-trimethyl-1,2-dihydroquinoline; and silica. Antioxidants are used in amounts of 1 to 5 parts by weight per hundred parts by weight of thermoplastic resin.

The thermoplastic resin can be crosslinked by adding a crosslinking agent to the composition or by making the resin hydrolyzable, which is accomplished by adding hydrolyzable groups such as $-Si(OR)_3$ wherein R is a hydrocarbyl radical to the resin structure through copolymerization or grafting.

Suitable crosslinking agents are organic peroxides such as dicumyl peroxide; 2,5-dimethyl-2,5-di(t-butylperoxy)hexane; t-butyl cumyl peroxide; and 2,5-dimethyl-2,5-di(t-butylperoxy)hexane-3. Dicumyl peroxide is preferred.

Hydrolyzable groups can be added, for example, by copolymerizing ethylene with an ethylenically unsaturated compound having one or more $-Si(OR)_3$ groups such as vinyltrimethoxysilane, vinyltriethoxysilane, and gammamethacryloxypropyltrimethoxysilane or grafting these silane compounds to the resin in the presence of the aforementioned organic peroxides. The hydrolyzable resins are then crosslinked by moisture in the presence of a silanol condensation catalyst such as dibutyltin dilaurate, dibutyltin diacetate, stannous acetate, lead naphthenate, and zinc caprylate. Dibutyltin dilaurate is preferred.

Examples of hydrolyzable copolymers and hydrolyzable grafted copolymers are ethylene/vinyltrimethoxy silane copolymer, ethylene/gammamethacryloxypropyltrimethoxy silane copolymer, vinyltrimethoxy silane grafted ethylene/ethyl acrylate copolymer, vinyltrimethoxy silane grafted linear low density ethylene/1-butene copolymer, and vinyltrimethoxy silane grafted low density polyethylene.

The composition of the invention can be extruded about, or coated on, an electrical conductor or subjected to injection, rotational, or compression molding.

In addition to being useful in wire and cable applications, subject composition can be used as a sheath for a glass core in fiber optics applications.

Commercial embodiments of the composition of the invention are generally obtained by mixing together the resin components and the inorganic flame retardant with one or more antioxidants and other additives in apparatus such as a Banbury mixer, a pressure kneader, a twin screw extruder, a Buss co-kneader, a Henschel mixer, or a roll kneader. The components can be added in any order and the components used in smaller amounts can be added via a masterbatch. The mixtures can then be extruded or subjected to injection molding, rotational molding, or compression molding.

The invention is illustrated by the following examples.

EXAMPLE 1

A flame retardant composition is prepared by mixing the following components in a Banbury mixer at 180°C for 10 minutes:

(i) 100 parts by weight of an ethylene/ethyl acrylate copolymer having a melt index of 0.7 gram per 10 minutes and containing 19 percent by weight ethyl acrylate;

(ii) 30 parts by weight of a low density linear ethylene/1-hexene copolymer grafted (modified) with 0.5 percent by weight of maleic anhydride. The density of the copolymer is 0.925 gram per cubic centimeter (before grafting);

(iii) 200 parts by weight magnesium hydroxide surface treated with stearic acid;

(iv) 0.5 parts by weight of an antioxidant, i.e. tetrakis [methylene-3 (3,5-di-tert-butyl-4-hydroxyphenyl) propionate] methane; and

(v) 2.5 parts by weight carbon black.

The composition is pelletized and the resulting pellets are formed into a sheet measuring 1 or 3 millimeters in thickness, 150 millimeters in length, and 180 millimeters in width by hot pressing at 150°C under a pressure of 100 kilograms per square meter for 3 minutes after preheating at 150°C for 5 minutes.

From the sheet are punched out rectangular and dumbbell test specimens.

Flame retardance, processability, tensile strength, and elongation of the test specimens are evaluated. The results are shown in the Table.

EXAMPLES 2 TO 16

Example 1 is repeated except that the components are varied. The variables and results are shown in the Table.

In the Table, amounts of components are in parts by weight. Numbers in parentheses refer to "Notes to Table".

TABLE

| Example | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| **Thermoplastic resin** | | | | | | | | | | | | | | | | |
| Ethylene/ethyl acrylate copolymer (1) | 100 | 100 | 100 | 100 | 100 | 100 | 100 | 100 | 100 | | | 100 | 100 | 100 | 100 | 100 |
| Ethylene/1-butene copolymer (2) | | | | | | | | | | 100 | 100 | | | | | |
| **Acid-modified copolymer** | | | | | | | | | | | | | | | | |
| Acid-modified low-density linear ethylene/1-hexene copolymer (3) | 30 | 50 | | | 80 | 50 | | | 80 | | | | | | | 10 |
| Acid-modified super-low-density linear ethylene/1-hexene copolymer (4) | | | 60 | | | | | 60 | | 70 | 60 | | | | | |
| Acid-modified low-density linear ethylene/1-octene copolymer (5) | | | | 70 | | | | 70 | | | | | | | | |
| Acid-modified low-density high-pressure polyethylene (6) | | | | | | | | | | | | 80 | | 80 | | |
| Acid-modified low-density linear ethylene/1-butene copolymer (7) | | | | | | | | | | | | | 80 | | 80 | |
| **Low-crystallinity ethylene/alpha-olefin copolymer** | | | | | | | | | | | | | | | | |
| Low-crystallinity ethylene/1-butene copolymer (8) | | | | | | 10 | 30 | 20 | 40 | 40 | 30 | | | 40 | 40 | |
| **Inorganic flame retardant** | | | | | | | | | | | | | | | | |
| Magnesium hydroxide (9) | 200 | 250 | 260 | 270 | 280 | 270 | 290 | 290 | 290 | | | 290 | 290 | 290 | 290 | 170 |
| Magnesium carbonate (10) | | | | | | | | | | 270 | | | | | | |
| Aluminum hydroxide | | | | | | | | | | | 250 | | | | | |
| **Evaluation** | | | | | | | | | | | | | | | | |
| Flame retardance (11) | 30 | 33 | 32 | 32 | 31 | 32 | 31 | 31 | 31 | 29 | 29 | 32 | 32 | 29 | 29 | 30 |
| Processability (12) | Fair | Fair | Fair | Fair | Fair | Fair | Fair | Fair | Good | Good | Good | Good | Good | Good | Good | Good |
| Tensile strength (13) | 113 | 115 | 113 | 111 | 110 | 120 | 123 | 126 | 128 | 130 | 128 | 80 | 91 | 87 | 95 | 98 |
| Elongation (13) | 655 | 650 | 655 | 653 | 645 | 673 | 678 | 679 | 695 | 698 | 693 | 661 | 648 | 678 | 679 | 655 |

Notes to Table:

1. Melt index = 0.7 gram per 10 minutes; 19 percent by weight ethyl acrylate.

2. Melt index = 0.8 gram per 10 minutes; density = 0.906 gram per cubic centimeter; produced in gas phase.

3. Melt index = 3 grams per 10 minutes; density before grafting = 0.925 gram per cubic centimeter; grafted (modified) with 0.5 percent by weight maleic anhydride.

4. Melt index = 5 grams per 10 minutes; density before grafting = 0.890 gram per cubic centimeter; grafted (modified) with 0.5 percent by weight maleic anhydride.

5. Grafted with 0.5 percent by weight maleic anhydride.

6. Melt index = 3.2 grams per 10 minutes; density before grafting = 0.922 gram per cubic centimeter; grafted (modified) with 0.5 percent by weight maleic anhydride.

7. Melt index = 0.8 grams per 10 minutes; density before grafting = 0.906 gram per cubic centimeter; grafted (modified) with 0.5 percent by weight maleic anhydride.

8. Crystallinity = 18%

9. Surface treated with stearic acid.

8

EP 0 370 517 B1

10.  $MgCO_3 \cdot Mg(OH)_2 \cdot H_2O$

11.  Expressed in terms of oxygen index determined according to ASTM D-2863.

12.  Determined by a visual observation of the surface of the specimen.

13.  Determined according to ASTM D-638.

Each composition contains components (iv) and (v) as set forth in Example 1.


**Claims**

1.  A composition comprising:
    (i) a thermoplastic resin;
    (ii) an inorganic flame retardant;
    (iii) a copolymer of ethylene and either 1-hexene or 1-octene, said copolymer having been modified with a unsaturated organic compound containing at least one carboxylate group; and
    (iv) optionally, a copolymer of ethylene and one or more alpha-olefins having a crystallinity of less than 40 percent by weight.

2.  The composition defined in claim 1 wherein for each 100 parts by weight of thermoplastic resin, the following are present in the following proportions:

| Components | Parts by Weight |
|---|---|
| (ii) | 60 to 450 |
| (iii) | 20 to 80 |
| (iv), if any | 10 to 40 |

3.  The composition defined in at least one of the claims 1 to 2 wherein the thermoplastic resin is an ethylene homopolymer or copolymer.

4.  The composition defined in at least one of the claims 1 to 3 wherein the inorganic flame retardant is magnesium hydroxide.

5.  The composition defined in claim 4 wherein the magnesium hydroxide is surface treated with a fatty acid or a metallic salt of a fatty acid.

6.  The composition defined in at least one of the claims 4 to 5 wherein the magnesium hydroxide has an average particle diameter in the range of 0.1 to 15 microns and a surface area in the range of 1 to 20 square meters per gram.

7.  A composition comprising:
    (i) a thermoplastic resin, which is an ethylene homopolymer or copolymer, and
        based upon 100 parts by weight of the thermoplastic resin,
    (ii) 60 to 450 parts by weight of a magnesium hydroxide, surface treated with a fatty acid;
    (iii) 20 to 80 parts by weight of a copolymer of ethylene and either 1-hexene or 1-octene, said copolymer having been modified with an unsaturated organic compound containing at least one

9

carboxylate group; and

(iv) optionally, 10 to 40 parts by weight of a copolymer of ethylene and one or more alpha-olefins having a crystallinity of less than 40 percent by weight.

8. The composition defined in at least one of the claims 1 to 7 additionally containing an organic peroxide crosslinking agent, e.g. dicumyl peroxide.

9. The composition defined in at least one of the claims 1 to 7 wherein the thermoplastic resin is a hydrolyzable resin.

10. The composition defined in claim 9 wherein the thermoplastic resin contains one or more -Si(OR)$_3$ groups wherein R is a hydrocarbyl radical through copolymerization or grafting.

11. The composition defined in claim 10 wherein the silane groups are provided by a vinyltrialkoxy silane.

12. The composition defined in at least one of the claims 10 to 11 wherein the resin is a copolymer of ethylene and vinyl trimethoxy silane.

13. The composition defined in claim 10 wherein the silane compound which is copolymerized or grafted is an alkenyl alkoxy silane.

14. The composition defined in claim 13 additionally containing a silanol condensation catalyst, e.g. dibutyltin dilaurate.

15. An electrical conductor coated with the composition defined in at least one of the claims 1 to 14, e.g. a cable having an outer jacket comprising said composition.

16. The composition defined in at least one of the claims 1 to 14 coated on, or extruded about, an electrical conductor.

17. A molded article comprising the composition defined in at least one of the claims 1 to 14.

**Patentansprüche**

1. Zusammensetzung, die umfaßt:

(i) ein thermoplastisches Harz;

(ii) ein anorganisches flammhemmendes Mittel;

(iii) ein Copolymer aus Ethylen und entweder 1-Hexen oder 1-Octen, wobei das genannte Copolymer mit einer ungesättigten organischen Verbindung modifiziert wurde, die wenigstens eine Carboxylatgruppe enthält; und

(iv) gegebenenfalls ein Copolymer aus Ethylen und einem oder mehreren $\alpha$-Olefinen mit einer Kristallinität von weniger als 40 Gew.-%.

2. Zusammensetzung nach Anspruch 1, worin für jede 100 Gew.-Teile des thermoplastischen Harzes folgende Komponenten in den folgenden Anteilen vorhanden sind:

| Komponenten | Gew.-Teile |
|---|---|
| (ii) | 60 bis 450 |
| (iii) | 20 bis 80 |
| (iv), soweit vorhanden | 10 bis 40 |

3. Zusammensetzung nach wenigstens einem der Ansprüche 1 bis 2, worin das thermoplastische Harz ein Ethylen-Homopolymer oder -Copolymer ist.

4. Zusammensetung nach wenigstens einem der Ansprüche 1 bis 3, worin das anorganischem flammhemmende Mittel Magnesiumhydroxid ist.

**5.** Zusammensetzung nach Anspruch 4, worin das Magnesiumhydroxid mit einer Fettsäure oder einem Metallsalz einer Fettsäure oberflächenbehandelt wurde.

**6.** Zusammensetzung nach wenigstens einem der Ansprüche 4 bis 5, worin das Magnesiumhydroxid einen durchschnittlichen Teilchendurchmesser im Bereich von 0,1 bis 15 Mikron und eine Oberfläche im Bereich von 1 bis 20 m$^2$ pro Gramm hat.

**7.** Zusammensetzung, die umfaßt:
(i) ein thermoplastisches Harz, das ein Ethylen-Homopolymer oder -Copolymer ist, und
- bezogen auf 100 Gew.-Teile des thermoplastischen Harzes -
(ii) 60 bis 450 Gew.-Teile eines mit einer Fettsäure oberflächenbehandelten Magnesiumhydroxids;
(iii)20 bis 80 Gew.-Teile eines Copolymers aus Ethylen und entweder 1-Hexen oder 1-Octen, wobei das genannte Copolymer mit einer ungesättigten organischen Verbindung modifiziert wurde, die wenigstens eine Carboxylatgruppe enthält; und
(iv) gegebenenfalls 10 bis 40 Gew.-Teile eines Copolymers aus Ethylen und einem oder mehreren $\alpha$-Olefinen mit einer Kristallinität von weniger als 40 Gew.-%.

**8.** Zusammensetzung nach wenigstens einem der Ansprüche 1 bis 7, die zusätzlich ein organisches Peroxid-Vernetzungsmittel, z. B. Dicumylperoxid, enthält.

**9.** Zusammensetzung nach wenigstens einem der Ansprüche 1 bis 7, worin das thermoplstische Harz ein hydrolysierbares Harz ist.

**10.** Zusammensetzung nach Anspruch 9, worin das thermoplastische Harz eine oder mehrere -Si(OR)$_3$-Gruppen, worin R eine Hydrocarbylgruppe ist, durch Copolymerisation oder Aufpfropfen enthält.

**11.** Zusammensetzung nach Anspruch 10, worin die Silangruppen von einem Vinyltrialkoxysilan zur Verfügung gestellt werden.

**12.** Zusammensetzung nach wenigstens einem der Ansprüche 10 bis 11, worin das Harz ein Copolymer von Ethylen und Vinyltrimethoxysilan ist.

**13.** Zusammensetzung nach Anspruch 10, worin die Silanverbindung, die copolymerisiert oder aufgepfropft wurde, ein Alkenylalkoxysilan ist.

**14.** Zusammensetzung nach Anspruch 13, die zusätzlich einen Silanol-Kondensationskatalysator, z. B. Dibutylzinn-dilaureat, enthält.

**15.** Elektrischer Leiter, beschichtet mit der Zusammensetzung nach wenigstens einem der Ansprüche 1 bis 14, z. B. ein Kabel mit einer äußeren Ummantelung, die die genannte Zusammensetzung umfaßt.

**16.** Zusammensetzung nach wenigstens einem der Ansprüche 1 bis 14, die als Beschichtung aufgebracht auf, oder extrudiert um einen elektrischen Leiter wurde.

**17.** Formkörper, der die Zusammensetzung nach wenigstens einem der Ansprüche 1 bis 14 umfaßt.

**Revendications**

**1.** Composition comprenant :
(i) une résine thermoplastique ;
(ii) un retardateur inorganique de flamme ;
(iii) un copolymère d'éthylène et de 1-hexène ou de 1-octène, ce copolymère ayant été modifié avec un composé organique non saturé contenant au moins un groupe carboxylate ; et
(iv) à titre facultatif, un copolymère d'éthylène et d'une ou plusieurs alpha-oléfines ayant une cristallinité inférieure à 40 pour cent en poids.

**2.** Composition suivant la revendication 1, dans laquelle les composants suivants sont présents dans les proportions ci-après, pour 100 parties en poids de résine thermoplastique :

| Composants | Parties en poids |
|---|---|
| (ii) | 60 à 450 |
| (iii) | 20 à 80 |
| (iv), éventuellement | 10 à 40 |

3. Composition suivant l'une au moins des revendications 1 et 2, dans laquelle la résine thermoplastique est un homopolymère ou un copolymère d'éthylène.

4. Composition suivant l'une au moins des revendications 1 à 3, dans laquelle le retardateur inorganique de flamme est l'hydroxyde de magnésium.

5. Composition suivant la revendication 4, dans laquelle l'hydroxyde de magnésium est traité en surface avec un acide gras ou un sel métallique d'un acide gras.

6. Composition définie dans l'une au moins des revendications 4 et 5, dans laquelle l'hydroxyde de magnésium a un diamètre moyen des particules compris dans la plage de 0,1 à 15 micromètres et une surface spécifique dans la plage de 1 à 20 mètres carrés par gramme.

7. Composition comprenant :
    (i) une résine thermoplastique, qui est un homopolymère ou un copolymère d'éthylène, et
        sur la base de 100 parties en poids de la résine thermoplastique,
    (ii) 60 à 450 parties en poids d'un hydroxyde de magnésium traité en surface avec un acide gras ;
    (iii) 20 à 80 parties en poids d'un copolymère d'éthylène et de 1-hexène ou de 1-octène, ce copolymère ayant été modifié avec un composé organique non saturé contenant au moins un groupe carboxylate ; et
    (iv) facultativement, 10 à 40 parties en poids d'un copolymère d'éthylène et d'une ou plusieurs alphaoléfines ayant une cristallinité inférieure à 40 pour cent en poids.

8. Composition suivant l'une au moins des revendications 1 à 7, contenant en outre comme agent de réticulation un peroxyde organique, par exemple le peroxyde de dicumyle.

9. Composition suivant l'une au moins des revendications 1 à 7, dans laquelle la résine thermoplastique est une résine hydrolysable.

10. Composition suivant la revendication 9, dans laquelle la résine thermoplastique contient un ou plusieurs groupes -Si(OR)$_3$, où R désigne un radical hydrocarbyle, ajoutés par copolymérisation ou greffage.

11. Composition suivant la revendication 10, dans laquelle les groupes silane sont apportés par un vinyltrialkoxy-silane.

12. Composition suivant l'une au moins des revendications 10 et 11, dans laquelle la résine est un copolymère d'éthylène et de vinyltriméthoxysilane.

13. Composition suivant la revendication 10, dans laquelle le silane qui est copolymérisé ou greffé est un alcénylalkoxysilane.

14. Composition suivant la revendication 13, contenant en outre un catalyseur de condensation de silanol, par exemple le dilaurate de dibutylétain.

15. Conducteur électrique, revêtu de la composition définie dans l'une au moins des revendications 1 à 14, par exemple un câble portant une gaine extérieure comprenant ladite composition.

16. Composition définie dans l'une au moins des revendications 1 à 14, appliquée comme revêtement sur un conducteur électrique ou extrudée autour de ce conducteur.

17. Article moulé, comprenant la composition définie dans l'une au moins des revendications 1 à 14.

12